# EUROPEAN PATENT SPECIFICATION

(11) **EP 1 819 294 B1**
(45) Date of publication and mention of the grant of the patent: **01.02.2012**
(21) Application number: 04793698.4
(22) Date of filing: 22.10.2004
(51) Int. Cl.: A61C 17/06, A61C 17/14

(54) **WATER SEPARATOR FOR CONTINUOUS SEPARATION OF WATER, AIR AND PARTICLES, AND METHOD FOR CONTROLLING SAID SEPARATOR**
WASSERABSCHEIDER FÜR DIE KONTINUIERLICHE ABSCHEIDUNG VON WASSER, LUFT UND TEILCHEN, UND VERFAHREN ZUR KONTROLLE DES ABSCHEIDERS
SEPARATEUR D'EAU POUR LA SEPARATION CONTINUE D'EAU, D'AIR ET DE PARTICULES, ET SON PROCEDE DE COMMANDE

(43) Date of publication of application: 22.08.2007
(73) Proprietor: Moe, Fridthjof, 1440 Drøbak (NO)
(72) Inventor: Moe, Fridthjof, 1440 Drøbak (NO)
(74) Representative: Ildahl, Bjørn Storm
(86) International application number: PCT/NO2004/000322
(87) International publication number: WO 2006/043817

(56) References cited:
- EP-A2- 0 387 774
- US-A- 4 293 300
- US-A- 4 564 374
- US-A- 4 684 345

## Description

The present invention is related to a water separator for continuous separation of water, air and particles.

A water separator as defined in the preamble of claim 1 is disclosed in US-A-4 293 300.

Separators of the above type are used by dentists, dental surgery as well as in other areas such as water absorbers, where the object is to separate air from water and particles which are sucked into a piping system.

Such apparatus is well known and in use by dentists sucking saliva from the mouth of patients during works in the oral cavity.

The known apparatus has an important disadvantage as when the tank for collecting water is full, the apparatus as such has to be stopped to empty the tank, whether in middle of an operation or not. Known apparatus also are rather voluminous and comprise a plurality of parts.

It therefore is an object for the present application to provide an apparatus which is small even for large quantity such as for many dentists at the same time. Above all it is an object to provide an apparatus which can work continuously without the need to stop the apparatus for emptying the tank.

The above objects are achieved with the separator according to the present invention as defined by the features stated in the claim.

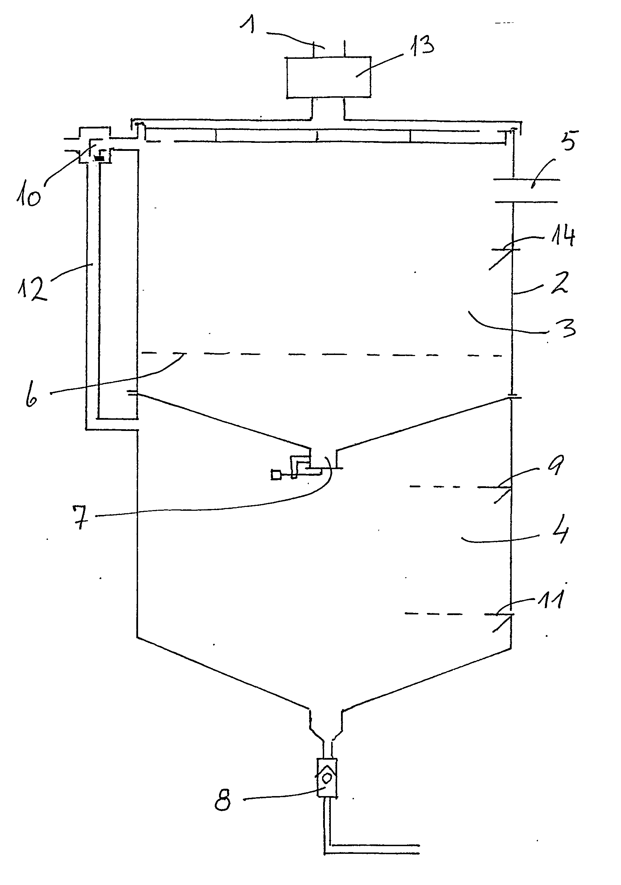

The drawing discloses schematically a vertical section of the apparatus according to the invention.

A suction motor 13 is connected with the outlet 1 on top of the tank 2. The tank 2 comprises an upper chamber 3 and a lower chamber 4. The mixture to be separated is guided into an inlet pipe 5 and may comprise water, air, dust, blood as well as residues of flesh from the mouth.

The inlet pipe 5 is guiding the mixture of water and air against the cylindrical wall of the upper chamber 3 thereby allowing water, dust, blood and such to fall down, whereas the air is escaping upwardly through the outlet 1 on top of the tank 2.

The mixture of water, dust, blood etc. passes through a coarse air filter 6 thereby capturing the larger particles and allowing the smaller and liquid part to escape through a valve 7 in the bottom of the upper chamber 3 into the lower chamber 4.

A three way valve 10 connects in the normal position the upper chamber 3 with the lower chamber 4, thereby maintaining the same underpressure in the upper chamber 3 as in the lower chamber 4.

The lower chamber 4 is normally closed at the bottom by a check valve 8, thereby allowing the lower chamber 4 to be filled up with water and possibly smaller particles having passed through the coarse air filter 6 and the valve 7.

When the lower chamber 4 is filled up to a specified level, a level switch 9 activates the three-way valve 10 to close the connection between the upper and the lower chambers and to let air into the lower chamber 4. The valve 7 then automatically will be closed due to the underpressure in the upper chamber 3. The pressure in the lower chamber 4 then will be released and thereby the check valve 8 will open and drain the content of the lower chamber 4 until the water level in the lower chamber reaches a lower level switch 11 which then is activated to return the three-way valve 10 to the normal operation position, thereby closing the air supply to the lower chamber 4 and connecting the underpressure of the upper chamber 3 to the lower chamber 4.

When the same pressure is reached in the upper and the lower chambers, the valve 7 will open and water which in the meantime has been collected in the upper chamber 3 will fall down into the lower chamber 4. The normal operation mode then is reestablished as the upper chamber 3 is connected with the lower chamber 4 through the three-way valve 10 and the connecting piping 12. Due to the underpressure the check valve 8 at the bottom of the lower chamber 4 will close.

The process then will continue in an automatic manner allowing the lower chamber 4 to be emptied during a constant supply of water and mixture through the inlet pipe 5.

A level switch 14 is arranged in the upper chamber 3. If the surface of the content in the upper chamber 3 rises to an undesired level during emptying of the lower chamber 4 the level switch 14 deactivates the suction motor 13. This is a precaution to avoid the suction motor 13 in special cases to suck water from the upper chamber 3.

## Claims

1. Water separator for continuous separation of water, air and particles, said separator comprising an inlet pipe (5) for receipt of a mixture of water, air and particles simultaneously from several sources such as dental surgeons etc. and an outlet pipe (1) being connection to a suction motor (13), comprising an upper chamber (3) being connected with a lower chamber (4) by a valve (7) in the bottom of the upper chamber (3) and a pipe (12) connecting the upper chamber (3) with the lower chamber (4), the lower chamber (4) normally being closed by a check valve (8) in the bottom, **characterised in that** a three-way valve (10) located in the pipe (12) being adapted to establish a connection between the upper (3) and lower (4) chambers in a first position and closing said connection to the upper chamber and allowing atmospheric air enter into the lower chamber (4) in a second position, the upper chamber (3) comprising a coarse air filter (6) capturing particles from the liquid flow to the lower chamber and the lower chamber (4) comprising a level switch (9) adapted to place the three way valve (10) in the second position when the water level in the lower chamber (4) reaches the level switch (9) and a lower level switch (11) below the first level switch (9), being adapted to return the three way valve (10) to the first position when the water level in the lower chamber (4) reaches the lower level switch (11).

2. Method of controlling a water separator according to claim 1, **characterised by** said level switch (9) being activated by the water surface reaching said level switch (9) causing the three-way valve (10) to close the connection to the upper chamber (3) and allowing atmospheric air to enter into the lower chamber (4), the valve (7) in the upper chamber (3) thereby closing due to the under pressure in the upper chamber (3), the check valve (8) opening due to the atmospheric pressure in the lower chamber (4) thereby allowing the content of the lower chamber (4) to be drained until the surface of the content in the lower chamber (4) reaches the lower level switch (11) said switch activating the three-way switch (10) to return to the first position for normal operation.

## Patentansprüche

1. Wasserabscheider zum kontinuierlichen Abscheiden von Wasser, Luft und Teilchen, wobei der Abscheider über eine Einlassleitung (5) zur Aufnahme einer Mischung von Wasser, Luft und Teilchen gleichzeitig aus mehreren Quellen wie einer Zahnbehandlung und dergleichen und über eine Auslassleitung (1) verfügt, die an einen Saugmotor (13) angeschlossen ist, sowie eine obere Kammer (3), die mit einer unteren Kammer (4) über ein Ventil (7) in dem unteren Bereich der oberen Kammer (3) verbunden ist, und eine Leitung (12) aufweist, die die obere Kammer (3) mit der unteren Kammer (4) verbindet, wobei die untere Kammer (4) normalerweise durch ein Rückschlagventil (8) im unteren Bereich geschlossen ist, **dadurch gekennzeichnet, dass** in der Leitung (12) ein Dreiwegeventil (10) angeordnet ist, das dazu eingerichtet ist, eine Verbindung zwischen der oberen Kammer (3) und der unteren Kammer (4) in einer ersten Stellung herzustellen und diese Verbindung zu der oberen Kammer zu schließen sowie den Einlass von atmosphärischer Luft in die untere Kammer (4) in einer zweiten Stellung zu gestatten, wobei die obere Kammer (3) über einen groben Luftfilter (6) verfügt, der Teilchen aus dem Flüssigkeitsstrom in die untere Kammer entfernt und wobei die untere Kammer (4) über einen Pegelschalter (9) verfügt, der dazu eingerichtet ist, das Dreiwegeventil (10) in die zweite Stellung zu bringen, wenn der Wasserpegel in der unteren Kammer (4) den Pegelschalter (9) erreicht, und mit einem unteren Pegelschalter (11) unterhalb des ersten Pegelschalters (9) ausgestattet ist, der dazu eingerichtet ist, das Dreiwegeventil (10) in die erste Stellung zurückzubringen, wenn der Wasserpegel in der unteren Kammer (4) den unteren Pegelschalter (11) erreicht.

2. Verfahren zum Beeinflussen eines Wasserabscheiders nach Anspruch 1, **gekennzeichnet durch** ein Aktivieren des Pegelschalters (9) **durch** ein Erreichen des Pegelschalters (9) **durch** die Wasseroberfläche, was das Dreiwegeventil (10) veranlasst, die Verbindung zwischen der oberen Kammer (3) zu schließen und atmosphärischer Luft den Eintritt in die untere Kammer (4) zu gestatten, wobei hierdurch das Ventil (7) in der oberen Kammer (3) aufgrund des Unterdrucks in der oberen Kammer (3) schließt, wobei das Rückschlagventil (8) aufgrund des Umgebungsdruckes in der unteren Kammer (4) öffnet, wobei hierdurch der Inhalt der unteren Kammer (4) abgeführt werden kann, bis die Oberfläche des Inhalts in der unteren Kammer (4) den unteren Pegelschalter (11) erreicht, wobei dieser Schalter das Dreiwegeventil (10) zum Zurückkehren in die erste Stellung für einen Normalbetrieb veranlasst.

## Revendications

1. Séparateur d'eau pour séparation en continu d'eau, d'air et de particules, ledit séparateur comprenant un tuyau d'entrée (5) pour recevoir un mélange d'eau, d'air et de particules simultanément de plusieurs sources, telles que des chirurgiens dentaires ; etc. et un tuyau de sortie (1) raccordé à un moteur d'aspiration (13), comprenant une chambre supérieure (3) raccordée à une chambre inférieure (4) par une soupape (7) dans le fond de la chambre supérieure (3) et un tuyau (12) raccordant la chambre supérieure (3) à la chambre inférieure (4), la chambre inférieure (4) étant normalement fermée par une soupape antiretour (8) dans le fond, **caractérisé en ce qu'**une soupape à trois voies (10) située dans le tuyau (12) est à même d'établir une liaison entre les chambres supérieure (3) et inférieure (4) dans une première position et de fermer ladite liaison avec la chambre supérieure et permet à l'air de l'atmosphère d'entrer dans la chambre inférieure (4) dans une deuxième position, la chambre supérieure (3) comprenant un filtre d'air grossier (6) capturant des particules de l'écoulement de liquide allant vers la chambre inférieure (4) et la chambre inférieure (4) comprenant un commutateur à niveau (9) adapté pour placer la soupape à trois voies (10) dans la deuxième position lorsque le niveau de l'eau dans la chambre inférieure (4) atteint le commutateur à niveau (9) et un commutateur à niveau inférieur (11) en dessous du premier commutateur à niveau (9) est à même de ramener la soupape à trois voies (10) à la première position lorsque le niveau d'eau dans la chambre inférieure (4) atteint le commutateur à niveau inférieur (II).

2. Procédé de commande d'un séparateur d'eau selon la revendication 1, **caractérisé en ce que** ledit commutateur à niveau (9) est activé par la surface de l'eau qui atteint ledit commutateur à niveau (9) amenant la soupape à trois voies (10) à fermer la liaison avec la chambre supérieure (3) et permettant à l'air de l'atmosphère d'entrer dans la chambre inférieure (4), la soupape (7) dans la chambre supérieure (3) se fermant ainsi en raison de la dépression dans la chambre supérieure (3), la soupape antiretour (8) s'ouvrant en raison de la pression atmosphérique dans la chambre inférieure (4), permettant ainsi au contenu de la chambre inférieure (4) d'être déchargé jusqu'à ce que la surface du contenu dans la chambre inférieure (4) atteigne le commutateur à niveau inférieur (11), ledit commutateur activant la soupape à trois voies (10) pour revenir dans la première position pour un fonctionnement normal.
